Europäisches Patentamt

European Patent Office

Office européen des brevets

(11) Publication number: **0 227 615**
**A2**

## (12) EUROPEAN PATENT APPLICATION

(21) Application number: **86830377.7**

(22) Date of filing: **18.12.86**

(51) Int. Cl.⁴: **B 01 D 1/06**
**A 23 L 2/00**

(30) Priority: **20.12.85 IT 4687585**

(43) Date of publication of application:
**01.07.87 Bulletin 87/27**

(84) Designated Contracting States:
**AT BE CH DE ES FR GR IT LI**

(71) Applicant: **Bolzani, Otello**
**Viale Campanini, 17/1**
**I-43100 Parma (IT)**

**Iotti, Alcide**
**Viale Campanini, 17/A**
**I-43100 Parma (IT)**

(72) Inventor: **Bolzani, Otello**
**Viale Campanini, 17/1**
**I-43100 Parma (IT)**

(74) Representative: **Cicogna, Franco**
**Ufficio Internazionale Brevetti Dott.Prof. Franco Cicogna**
**Via Visconti di Modrone, 14/A**
**I-20122 Milano (IT)**

(54) **Vaporizing apparatus for concentrating fluid products in general.**

(57) A concentrating apparatus for concentrating fluid products in general,comprising a housing (1) supplied with steam and a vertically extending throughgoing tube bundle (4),includes,within each individual tube having an inner diameter of at least 180 mm,a rotating coaxial member (15) which forms,with the tube (4),a gap (40) having a comparatively much greater cross section than the cross-section of an upper duct for the inlet of the product,which is able of forming on the inner surface of the tube an even product layer having a thickness less than the width of the gap and being so arranged as to facilitate the product layer to downward flow.

FIG. 1

EP 0 227 615 A2

## Description

"VAPORIZING APPARATUS FOR CONCENTRATING FLUID PRODUCTS IN GENERAL"

## BACKGROUND OF THE INVENTION

The present invention relates to a vaporizing apparatus of high use flexibility which can be installed in systems for concentrating juices in general.such as citrus juices,fruit juices and tomato juices.as well as in systems for concentrating non foodstuffs fluid by-products and waste fluid products,such as industrial sludges.

With reference to the above mentioned juices. these juices,as is known.are subjected,as they are processed,to a concentrating step consisting of heating the product in order to separate therefrom, by concentration,a portion of the water contained therein.For carrying out the concentration step there are used the so-called falling-film devices which comprise a vertical tube bundle housed in a chamber supplied with steam.The tubes of the tube bundle lead to an upper horizontal wall thereon the juice to be concentrated is fed,which juices freely enters the bundle tubes and distributes on their inner surfaces so as to form tubular product layers or films which are heated as they flow downward by gravity.The tubes of these known devices have an inner diameter of substantially 30-40 mm.

The mentioned known vaporizing devices,which can also be used in tandem with other like devices, operate in a satisfactory way with rather fluid products having good flowing characteristics,such as citrus juices;however they are not able of properly operating with other types of juices, for exaple tomato juices.This is due to the fact that,before achieving an acceptable concentration rate,the tomato juices have such a viscosity and density hindering a free and even flow of this product through the tubes,thereto it adhers and thereon it dries,with the consequent problems deriving therefrom.

For concentrating tomato juices,in particular, vaporizing devices are used in which the juices to be concentrated are subjected to forced circulation.

More specifically the juices are force conveyed along a closed loop comprising the mentioned tube bundle,which is traversed many times by the juices, before other processing steps.

These known devices,on the other hand,though they are suitable for processing tomato juices, are unsuitable for other types of juices,such as citrus juices.This is due to the fact that,because of the multiple passages through the tube bundle, these juices are subjected to an excessively long thermal cycle which is susceptible to alter the chemical and physical characteristics of the product which,at the end of the processing cycle, has a rather poor quality.

Moreover the above forced circulation devices have been found disadvantageous from the operating cost standpoint since the pumps for force circulating the juices,which are comparatively expensive per se.require a great and expensive amount of operating power.

In addition to the foregoing,the known vaporizing devices.both of the falling film and force circulation type,may be hardly used as the flow rate or amount of the product to be concentrated is varied.

Thus.because of the mentioned reasons, there is very felt in this field the need of providing a concentrating device able of concentrating juices of very different characteristics.such as tomato juice and citrus juice.as well as yet other juices,such as fruit juices.

In particular that need is typical of the shops which transform several different juices, which juices are presently processed by different systems,with the probles deriving therefrom.

## SUMMARY OF THE INVENTION

Thus,the main object of the present invention is to overcome the above mentioned drawbacks of known juice concentrating devices,by simple means.

Another object of the present invention is to provide such a vaporizing device which is able of properly operating so as to fit the product flow rates through the processing system.

According to one aspect of the present invention,the above mentioned objects,as well as yet other objects,which will become more aparent hereinafter,are achieved by an apparatus or device comprising a housing supplied with steam and holding therein a plurality of throughgoing vertical tubes and,for each vertical tube,an upper duct for the inlet of the product to be processed,and a central rotating member which is provided for distributing said product on the inner wall of the tube in a comparatively thin even layer,and for facilitating the flowing of said layer along the tube,toward the outlet thereof.

According to another aspect of the present invention,in order to form the mentioned product layer,said rotating member is so arranged as to define,with said tube.a gap having a cross section comparatively much greater than the cross section of said inlet duct.the tube having an inner diameter of at least 180 mm.

Owing to the rather great difference existing between the cross sections of said ducts and gaps,the thickness of the layer is less than the width of said gap.

Said rotating member comprises a core provided with at least a helicoidal fin,having a constant or not constant pitch and extending to nearly contact the inner surface of the corresponding tube.

According to a further aspect of the present invention means are moreover provided for overriding at will one or more rotating members,as well as means for simultaneously closing the respective product inlet ducts.

Thus the invenion fully achieves the intended objects.

Infact it is possible to properly concentrate all of the types of juices thereinabove mentioned, either of foodstuffs materials or not,from those of comparatively high viscosity which are prevented from adhering to and drying on the tube,to those of low viscosity which are subjected to a thermal cycle which does not cause any variations of their chemical and physical characteristics.

In addition to the foregoing,the possibility of overriding at will any number of roating members,provides the invention with the feature of perfectly fitting the desired flow rates of the products to be processed.

## BRIEF DESCRIPTION OF THE DRAWINGS

Further characteristics and structural advantages of the present invention will become more apparent thereinafter from the following detailed description of a preferred embodiment thereof. with reference to the accompanying drawings,in which:

Fig.1 is partial cross-sectional broken away side view illustrating the apparatus according to the present invention;

Fig.2 is a cross-sectional view taken along the line II-II of fig.1;

and

Fig.3 is a cross-sectional view taken along the line III-III of fig.2.

## DESCRIPTION OF THE PREFERRED EMBODIMENT

It should be pointed out,at first,that the invention is provided for the use in a system for concentrating fluid products in general,individually or in tandem with other like apparatus,as it should be clear to those skilled in the art.

It should be moreover be pointed out that in the following disclosure reference will be made to foodstuffs juices;however it should be apparent that the invention can also be used for processing other fluid products.

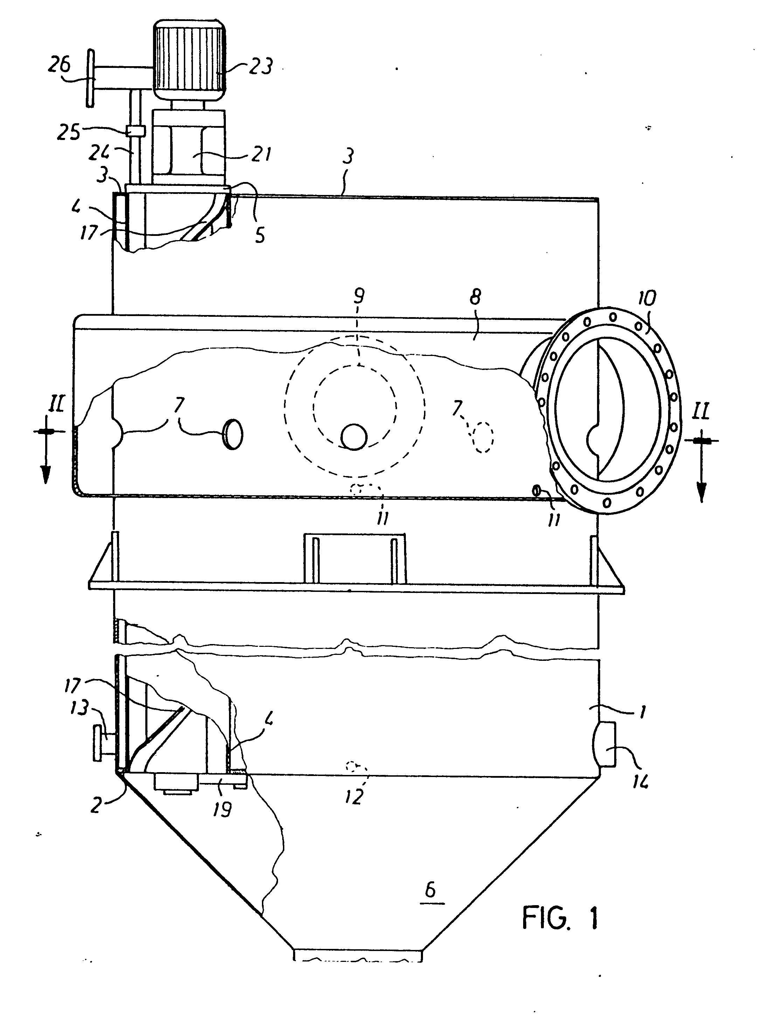

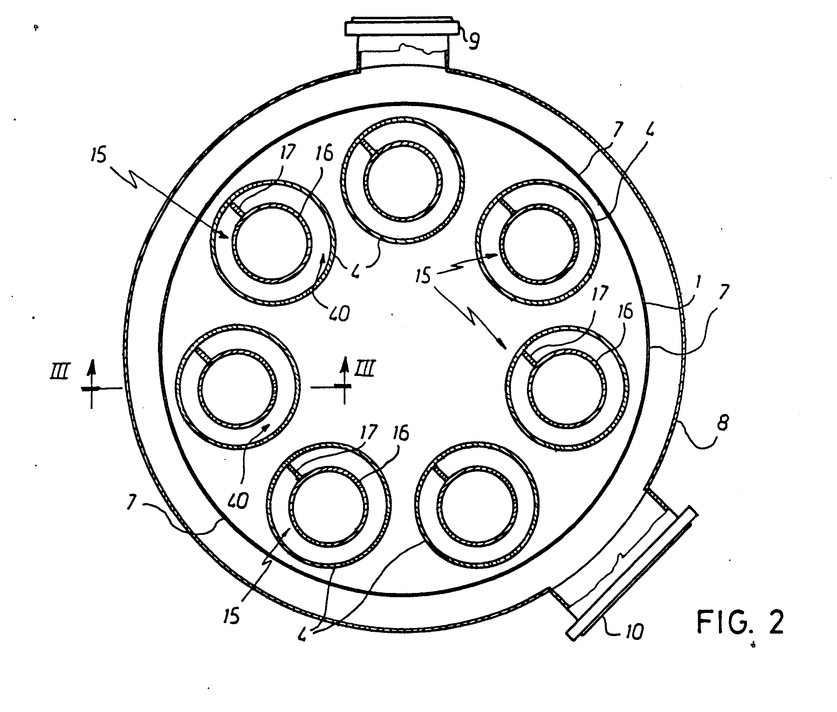

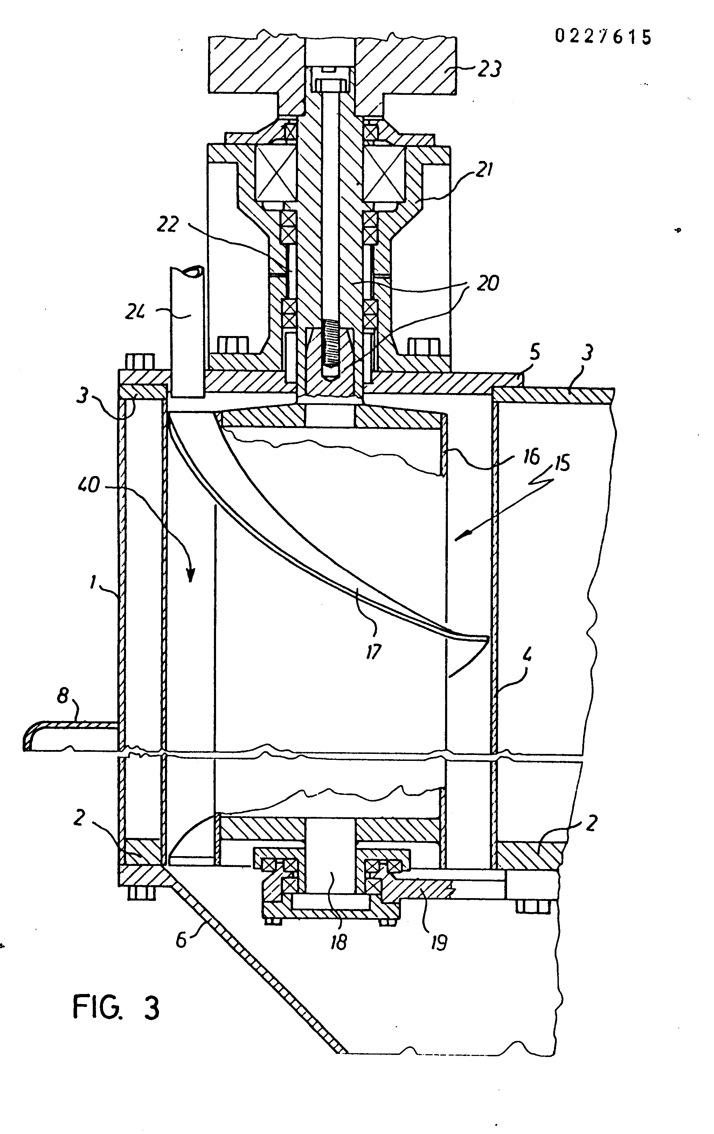

From the mentioned figures,the apparatus according to the invention comprises a vertical cylindrical housing 1 which is tight closed by the bottom and top walls 2 and 3 (figs.1 and 3) which walls are both provided with a circumferential plurality of like equispaced holes.To each pair of aligned holes a vertical tube 4 corresponds(fig.2) which is closed at the top by a cover5(fig.3) and at the bottom leads to a collecting vessel 6.In particular the collecting vessel 6 discharges the collected product into a chamber (not shown) in which the product is separated from the vapor or steam generated thereby by heating.Moreover, in a conventional way,in said chamber a negative pressure is present which is also transmitted to the tubes 4 which,in the shown embodiment,have an inner diameter of 300 mm.

In order to heat said tubes 4,at the top of the housing 1 there are provided a plurality of circumferential ports 7 leading to a toroidal outer steam manifold 8,provided with two inlets 9 and 10(figs 1 and 2).These inlets have different diameters to allow for the inventive apparatus to be coupled to different steam sources.

More specifically,if the manifold 8 is directly coupled to a steam generating boiler,then the smaller inlet 9 will be used and the larger inlet 10 will be left closed and reversely as the manifold is coupled to the mentioned separating chamber included in the assembly upstream of the processing system.

As clearly shown in fig.1,at the bottom of the manifold 8 and on the housing1,there is provided at least a small hole 11 for discharging inside the housing the condensing water of 8.

Moreover,at the bottom of the housing 1, there are provided an outlet 12 for evacuating the condensate,an outlet 13 for sucking the not condensable gases as well as an inspection window 14.

Figs.2 and 3 show that within each individual pipe or tube 4 there is rotatably mounted a coaxial member 15 for distributing the juice product, comprising a hollow cylindrical core 16 and an outer helicoidal fin 17 having its outer edge practically contacting the tube 4.Said core 16 is closed at the ends thereof,thereat it is provided with a holding lower pin member 18 which is idly mounted on a suitable supporting member 19,and an upper driving shaft 20 passing through the cover 5, fig.3,and held in a suitable carrier 21.

As clearly shown,said shaft 20 is made in two parts in order to facilitate assembling/disassembling of said member 15 and between said shaft 20 and carrier 21 there is provided a hydraulic gasket 22 for separating the tube 4 from the environment.

Moreover,on the carrier 21 there are fitted means 23 for driving the shaft 20,which means may have any suitable configurations,as it will become more apparent thereinafter.

A juice inlet duct 24,fig.3,communicates with the gap defined between said tube 4 and core 16, which duct passes through the cover 5 and is coupled, through a suitable valve 25,to a juice supplying manifold 26(fig.1).

As shown in fig.3,the cross-section of the duct 24 is comparatively much smaller than the outlet of the gap 40 defined between said core 16 and tube 4.Thus,in operation of the apparatus according to the invention,the fin 17 will spread the inlet juice product along the inner surface of the tube 4,thereon an even and comparatively thin layer of juice is formed which is caused to downward flow by the fin and which,as it should be apparent, has a thickness less than the width of the gap 40. Obviously a plurality of fins can be provided,and the rotating speed of the rotating member 15 will depend on the juice type and viscosity thereof.

The member 15,in particular,are driven,in a first embodiment,by a corresponding number of motor reducing assemblies 23 with a built-in speed changing unit.

Thus,as aforesaid, it will be possible to override one or more rotating member 15,with a simultaneous closure of the respective ducts 24, in order to fit the apparatus according to the present invention to the juice production capability of the processing system.

According to the invention,those same results are obtained by using a single motor reducing assembly 23 entraining a twin toothed belt,passing alternately outside and inside ring gears arranged at the top of the shafts 20,through suitable engaging/disengaging means.

For example said means may consist of a longitudinally sliding key.

Alternatively,a single reducing assembly 23 may drive all of the rotating members 15,through a ring gear train keyed on the shaft 20 in the above mentioned manner.

Finally,with reference to fig.3,it should be apparent that the helicoidal fin 17 has a constant and comparatively large pitch,practically corresponding to twice the diameter of the core 16.

Since in the gap 40 a progressively increasing amount of steam is generated as the juice downwardly flows,according to the invention. in order to increase the steam collecting space. a downward increasing pitch fin 17 may be provided.

Alternatively,the core 16 may advantageously be formed as a reversed frustum of cone,provided with one or more fins 17,of constant pitch or of downward increasing pitch.

While the invention has been disclosed and illustrated with reference to exemplary embodiments thereof,it should be pointed out that it is susceptible to all modifications and variations falling within its scope.

**Claims**

1- An apparatus for concentrating fluid products in general,of the type comprising a housing (1) supplied with steam and including a plurality of vertical tubes (4) for conveying the product to be concentrated,characterized in that each tube (4) has an inner diameter of at least 180 mm,and is provided with a small product inlet upper duct (24) and an inner rotating coaxial member (15) defining with said tube a gap which is comparatively much greater than the diameter of said duct, said rotating member being provided for forming on the inner surface of said tube a juice even layer having a thickness less than the width of said gap,and for facilitating the flow of said layer toward the lower end of said tube.

2- An apparatus according to claim1,characterized in that said rotating member (15) comprises a core (16) which is provided,on its outside,with at least a helicoidal fin (17) having its outer edge nearly in contact with the inner surface of said tube (4).

3- An apparatus according to claim 2,characterized in that said fin (17) has a constant pitch.

4- An apparatus according to claim2,characterized in that the pitch of said fin (17) progressively increases from the top to the bottom of said fin.

5- An apparatus according to claim 2,characterized in that said core (16) is of cylindrical shape.

6- An apparatus according to claim 2,characterized in that said core (16) is of reversed frustum of cone shape.

7- An apparatus according to claim1,characterized in that each tube (4) is closed at the top thereof by a cover (5) therethrough the shaft (20) for driving said core (16) and the corresponding inlet duct (24) are caused to pass,said inlet duct (24) leading to a manifold (26) for supplying said product through a valve (25).

8- An apparatus according to claim 1,characterized in that for each rotating member (15) there is provided a corresponding variable speed geared motor (23).

9- An apparatus according to claim9,characterized in that,for driving all of said rotating members (15),said apparatus comprises a twin toothed belt driven by a variable speed geared motor (23) and entrained on corresponding ring gears provided with engaging/disengaging means to/from said driving shaft.

10- An apparatus according to claim9,characterized in that,for driving said rotating members,said apparatus comprises a ring gear train meshing with one another and each provided with said engaging/disengaging means.

FIG. 1

FIG. 2

0227615

FIG. 3